# EUROPÄISCHE PATENTANMELDUNG

(11) **EP 1 375 001 A1**
(43) Veröffentlichungstag der Anmeldung: **02.01.2004**
(21) Anmeldenummer: 03014358.0
(22) Anmeldetag: 26.06.2003
(51) Int. Cl.: B02C 18/00, B30B 15/08, B08B 15/00

(54) **Dokumentenvernichter, insbesondere für eine Absauganlage**

(30) Priorität: 26.06.2002 DE 10229685
(71) Anmelder: SCHLEICHER & Co. INTERNATIONAL AKTIENGESELLSCHAFT, D-88677 Markdorf/Bodensee (DE)
(72) Erfinder: Dieck, E. Leopold, Dr., 88212 Ravensburg (DE)
(74) Vertreter: Patentanwälte , Ruff, Wilhelm, Beier, Dauster & Partner

(57) **Zusammenfassung**

Bei einem Ausführungsbeispiel eines erfindungsgemäßen Dokumentenvernichters mit einem Schneidwerk ist unter dem Schneidwerk ein Zwischenspeicher (14) für geschnittene Partikel (15) vorgesehen. Von dem Zwischenspeicher (14) führt über einen Verschluß (19) ein Absaugrohr (20) zu einer zentralen Absaugung. In den Wandungen (25, 26) des Zwischenspeichers (14) können Öffnungen (29) vorgesehen sein. Durch diese Öffnungen kann beim Absaugen der Partikel (15) Umgebungsluft zur Auflockerung der Partikel angesaugt werden. Ebenso kann hier Druckluft gezielt eingeblasen werden.

## Beschreibung

### Anwendungsgebiet und Stand der Technik

Die Erfindung betrifft einen Dokumentenvernichter gemäß dem Oberbegriff des Anspruchs 1. Dieser Dokumentenvernichter ist dazu ausgebildet, mit einer Anlage zur Abführung von geschnittenen Partikeln mehrerer Dokumentenvernichter, insbesondere mittels Absaugung, zusammenzuarbeiten.

Eine solche Anlage ist in der DE 199 34 818 beschrieben. Dabei sind in einem Gebäude mehrere Dokumentenvernichter mit Absaugleitungen versehen, die zu zentralen Sammelmitteln in Form einer Absaugeinrichtung führen.

Hier besteht die Problematik bei der Ausgestaltung bzw. Dimensionierung der Absauganlage, dass nämlich die Absaugleistung sehr hoch gewählt sein muß, wenn sie jederzeit an sämtlichen Dokumentenvernichtern gleichzeitig und dauernd absaugen soll. Dabei würde sie die meiste Zeit sozusagen leer laufen. Es ist vorgeschlagen worden, die Absauganlage jeweils dann zu starten, wenn einer der Dokumentenvernichter in Betrieb ist. Jedoch ist dies in der Praxis auch sehr aufwendig und führt zu Problemen. Deswegen sind Absaugbehälter in Form von Zwischenspeichern odgl. eingeführt worden. Allerdings besteht hier oft das Problem, dass darin gelagerte geschnittene Partikel verklumpen und nur schwer abgesaugt werden können.

### Aufgabe und Lösung

Der Erfindung liegt die Aufgabe zugrunde, einen eingangs genannten Dokumentenvernichter zu schaffen, mit dem die Probleme des Standes der Technik gelöst werden können und der es insbesondere ermöglicht, effizient mit einer zentralen Absauganlage zusammenzuwirken und der das Problem der Verklumpung löst.

Gelöst wird diese Aufgabe durch einen Dokumentenvernichter mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist der Dokumentenvernichter eine Abführung geschnittener Partikel von dem Schneidwerk in einen Zwischenspeicher auf. Von diesem erfindungsgemässen Zwischenspeicher aus wiederum erfolgt die Absaugung. Hierzu ist an dem Zwischenspeicher eine Absaugöffnung vorgesehen. Der Zwischenspeicher weist Wandungen auf, die vorteilhaft zumindest eine Seitenbegrenzung des Zwischenspeichers bilden. Die Wandungen können dabei stabil ausgeführt sein. Die Wandungen des Zwischenspeichers sind luftdurchlässig ausgebildet. Dazu können sie beispielsweise perforiert sein oder Durchbrüche aufweisen. Die Luftdurchlässigkeit kann sich im wesentlichen über den gesamten Bereich der Wandungen erstrecken. Sie kann sich alternativ auch auf bestimmte, funktional besonders günstige Bereiche erstrecken.

Der Vorteil dieser Luftdurchlässigkeit besteht im wesentlichen darin, dass dadurch beim Absaugen Außenluft durch die Wandungen angesaugt wird und die Partikel durchwirbelt oder auflockert. Dadurch werden Verklumpungen gelockert oder aufgelöst. Das Absaugen kann leichter erfolgen.

Somit kann erfindungsgemäss vorgesehen werden, dass geschnittene Partikel in dem Zwischenspeicher für eine gewisse Zeit oder bis zu einer bestimmten Menge gesammelt werden. Dann kann eine Absaugung erfolgen. Dies hat den großen Vorteil, dass pro Dokumentenvernichter nicht so oft bzw. nicht permanent abgesaugt werden muß. Verklumpungen infolge großen Drucks bei zuviel angestauten Partikeln können so gelöst werden.

Der Zwischenspeicher kann vorteilhaft im wesentlichen als Raum, Kammer oder Behälter ausgebildet sein. Für die Dimensionierung seiner Größe kann als Anhaltswert eine Partikelmenge genommen werden, die bei einer bestimmten Anzahl von für diesen Dokumentenvernichter charakteristischen durchschnittlichen Schneidvorgängen anfällt. Dies können beispielsweise zwischen 10 und mehreren 100 Schneidvorgängen sein. Alternativ kann, um eine gewisse Größe nicht zu überschreiten, das Volumen zwischen 5l und bis zu 100l, vorzugsweise zwischen 2l und 20l, liegen. Damit ist es immer noch möglich, derartige Dokumentenvernichter ausreichend klein zu gestalten, damit sie wenig wertvollen Büroraum einnehmen. Schließlich ist dies einer der Hauptvorteile von zentralen Absauganlagen.

Zu Details für eine Absauganlage wird auf die vorgenannte DE 199 34 818 verwiesen. Deren Wortlaut wird durch ausdrückliche Bezugnahme zum Inhalt der Beschreibung gemacht.

Durchbrüche können derart ausgebildet sein, dass sie einen Durchtritt bzw. ein Entweichen der Partikel aus dem Zwischenspeicher bei gleichzeitig gegebener Luftdurchlässigkeit verhindern. Sie können beispielsweise nach Art von Schuppen mit einem Überhang nach unten und in den Zwischenspeicher hinein ausgebildet sein.

Alternativ zu Durchbrüchen kann ein Teil der Wandung aus einem Geflecht odgl. bestehen. Hier bietet sich ein Drahtgeflecht an. Der Unterschied zwischen Maschen und Durchbrüchen spielt für die Erfindung nur eine untergeordnete Rolle.

Gemäß einer weiteren Möglichkeit können Durchbrüche mit nach innen zu öffnenden Klappen verschlossen sein, um ein Entweichen der Partikel zu verhindern. Vorteilhaft sind die Klappen dabei an der Innenseite des Zwischenspeichers angeordnet und an ihrer Oberseite gelenkig gelagert. Dies ermöglicht es, dass sie durch ihr eigenes Gewicht oder eine Gewichtsbelastung von oben, wie beispielsweise durch aufliegende Partikel, geschlossen bleiben. Werden sie mit durchströmender Luft beaufschlagt, öffnen sie sich. Die Luft kann im wesentlichen ungehindert in den Zwischenspeicher eintreten zur Verwirbelung der Partikel und zur Auflockerung einer Verklumpung.

Bei einer bevorzugten Ausgestaltungsmöglichkeit der Erfindung sind die Durchbrüche mit der Umgebung luftführend verbunden derart, dass bei Absaugung von Partikeln aus dem Zwischenspeicher Umgebungsluft angesaugt wird. Sie strömt durch die angesammelten Partikel hindurch zur Absaugöffnung. Alternativ kann gezielt Druckluft eingesetzt werden.

Weiters ist es möglich, an der Absaugöffnung einen Verschluß, der insbesondere im wesentlichen luftdicht ist, vorzusehen. Dadurch ist es möglich, an der Absaugöffnung permanent den Unterdruck der Absauganlage anliegen zu lassen. Durch Öffnen des Verschlusses wird dann der Zwischenspeicher des Dokumentenvernichters geleert. Der Verschluss kann beispielsweise mittels Druckluft betätigt werden und entsprechend ausgebildet sein.

Bei einem Druckluftanschluss an den Dokumentenvernichter und/oder der Anlage ist es möglich, einen Teil der Druckluft mittels eines Kanals oder dergleichen zu einem oben beschriebenen Durchbruch oder einer luftdurchlässigen Wandung zu leiten. Durch das Anblasen speziell mit Druckluft können die Partikel noch besser verwirbelt werden. Das Verwirbeln mit Druckluft erfolgt bevorzugt gleichzeitig oder vor der Betätigung des Verschlusses zum Absaugen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnung

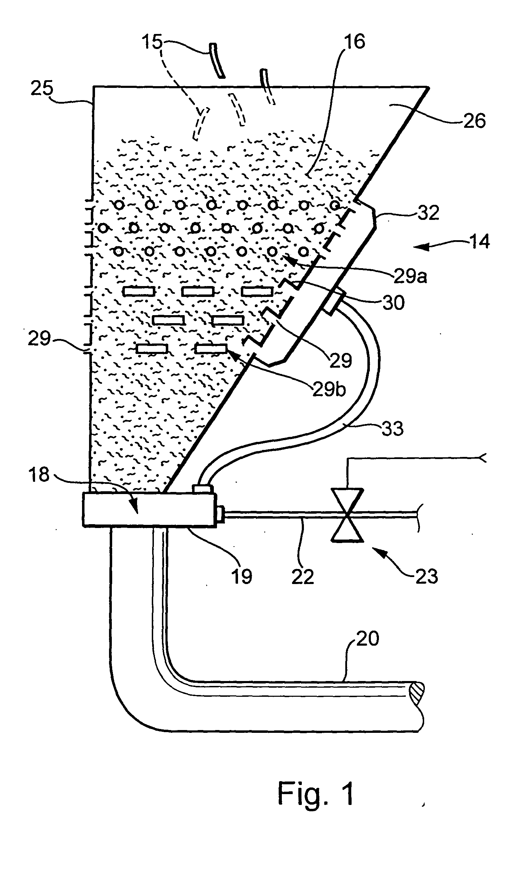

Ausführungsbeispiele der Erfindung sind in der Zeichnung dargestellt und werden im folgenden näher erläutert. In der Zeichnung zeigt Fig. 1 eine schematische Darstellung eines Zwischenspeichers mit luftdurchlässigen Wandungen sowie Drucklufteinblasung.

### Detaillierte Beschreibung der Ausführungsbeispiele

In Fig. 1 ist eine Seitenansicht einer möglichen Ausbildung eines erfindungsgemäßen Dokumentenvernichters mit einem Zwischenspeicher dargestellt. Diese Darstellung ist schematisch zu verstehen. Ein Schneidwerk ist nicht dargestellt, befindet sich aber wie üblich über dem Zwischenspeicher.

In Fig. 1 ist ein Zwischenspeicher 14 mit geraden Wandungen 25 und schrägen Wandungen 26 dargestellt. In der in Draufsicht zu sehenden schrägen Wandung 26 sind verschiedenartige Öffnungen 29, 29a und 29b dargestellt. Dies dient nur als Darstellung von möglichen Ausführungsbeispielen oder Anordnungsmustern. Selbstverständlich ist es möglich, dargestellte oder weitere Öffnungen einer Art oder unterschiedlicher Art zu vorzusehen. Die schrägen Wandungen dienen zur Vermeidung von Verklumpungen und sind Gegenstand einer anderen Patentanmeldung. Auf sie soll hier nicht näher eingegangen werden.

Unten ist an dem Zwischenspeicher 14 eine Absaugöffnung 18 vorgesehen. Diese ist mittels des Verschlusses 19 mit dem Absaugrohr 20 verbunden, welches zu einer vorbeschriebenen Absauganlage führen kann. Eine solche Absauganlage ist, wie zuvor erwähnt, in der DE 199 34 818 beschrieben, deren Wortlaut hiermit durch ausdrückliche Bezugnahme zum Inhalt der Beschreibung gemacht wird.

Der Verschluß 19, und damit die Absaugöffnung 18, ist öffenbar bzw. ansteuerbar über die Druckluftleitung 22. Diese Druckluftleitung 22 führt zu einer zentralen Druckluftverteilanlage. Diese kann vorteilhaft entsprechend den Absaugrohren 20 bzw. der Absauganlage in einem Gebäude verlaufen. Über das Ventil 23 kann der Verschluß 19 mittels der Druckluft aus der Druckluftleitung 22 betätigt werden, insbesondere geöffnet und geschlossen.

Die Öffnungen 29a sind relativ klein und im wesentlichen als runde Löcher ausgebildet. Die Öffnungen 29b dagegen sind waagerecht verlaufende Schlitze. Wie aus der Zeichnung entnommen werden kann, weisen die Öffnungen 29b an der Innenseite der Wandung 26 die Überhänge 30 auf. Dadurch wird verhindert, dass Partikel 15 durch die Öffnungen 29b, die doch erheblich größer sind als die Öffnungen 29a, aus dem Zwischenspeicher herausfallen. Solche oder ähnliche Überhänge 30 werden vorteilhaft bei Öffnungen 29 vorgesehen, durch die Partikel 15, welcher Größe auch immer, aus dem Zwischenspeicher fallen könnten.

Vorteilhaft sind Öffnungen 29, eventuell mit Überhängen 30, an allen Wandungen eines Zwischenspeichers vorgesehen. Da sie zur Durchwirbelung des Haufens 16 der geschnittenen Partikel 15 beim Absaugen dienen, sollten sie zumindest im unteren Bereich des Zwischenspeichers 14 vorgesehen sein. Vorteilhaft sind sie über die gesamte Wandung verteilt vorgesehen. Die Öffnungen 29 können beispielsweise aus den Wandungen herausgestanzt werden. Hierbei ist es möglich, in einem einzigen Arbeitsvorgang eine Öffnung zu stanzen und dabei gleichzeitig den Überhang 30 nach innen herauszubiegen. Über manchen oder auch allen Öffnungen 29 kann ein Druckluftverteiler 32 vorgesehen sein, der mit einer Druckluftleitung 33 versehen ist. Der Druckluftverteiler 32 überdeckt eine gewisse Anzahl von Öffnungen 29 oder alle. Dadurch ist es möglich, gezielt Druckluft durch die Öffnungen 29 in den Zwischenspeicher 14 einzublasen. Hierdurch erfolgt eine besonders starke Auflockerung des Haufens 16 der Partikel 15, wodurch ein Absaugen leicht und ohne Probleme möglich ist.

Wie dargestellt, ist die Druckluftleitung 33 mit dem Verschluß 19b verbunden. Innerhalb dieses Verschlusses 19 ist sie mit der Druckluftleitung 22 verbunden. Hier kann vorgesehen sein, dass nach einem Öffnen des Druckluftventils 23 Druckluft zuerst über die Leitung 33 an den Druckluftverteiler 32 geleitet wird zur Auflockerung des Haufens 16. Nach einer kurzen Zeit, beispielsweise wenigen Sekunden, kann der Verschluß 19b ebenfalls durch die Druckluft aus der Leitung 22 geöffnet werden. Dann setzt der Absaugvorgang durch das Absaugrohr 20 ein. Dadurch ist es möglich, den Haufen 16 kurz vor der Absaugung zu lockern. Ebenso ist es möglich, Absaugung und Lockerung gleichzeitig einsetzen zu lassen. Dadurch wird die Verschaltung der Druckluftleitungen einfacher.

Ein vereinfachter Verschluß kann als mit Federkraft nach oben beaufschlagte, nach unten bewegliche Klappe ausgebildet sein. Die Federkraft kann so dimensioniert sein, dass sie der Gewichtskraft eines mit Partikeln 15 gefüllten Haufens 16 widersteht. Kommt dagegen der Unterdruck über das Absaugrohr 20 hinzu, öffnet sich die Klappe nach unten und die Absaugung beginnt. Dies ist für Absauganlagen von Vorteil, bei denen nicht permanenter Saugbetrieb gegeben ist.

Wie aus der Darstellung ersichtlich wird, kann mit den dargestellten Anordnungen das Absaugen von Partikeln 15 durch Ansteuern des Verschlusses 19 beliebig gesteuert werden. Ein die Absaugung auslösendes Signal kann beispielsweise von einer Sensorvorrichtung an dem Zwischenspeicher kommen. Die Sensorvorrichtung kann dabei beispielsweise als Füllstandsanzeige ausgebildet sein und evtl. optische Sensoren aufweisen. Bei einer bestimmten Füllhöhe, beispielsweise etwa 75% des Fassungsvermögens des Zwischenspeichers, kann die Absaugung einsetzen. Weiters kann eine Ansteuerung über ein Zeitsignal erfolgen, beispielsweise mit bestimmten Zeitintervallen nach dem Einschalten des jeweiligen Dokumentenvernichters oder unabhängig davon.

## Patentansprüche

1. Dokumentenvernichter mit einem Schneidwerk zur Durchführung eines Partikelschnitts an Schneidgut, mit einer Zuführung für das Schneidgut und einer Abführung der geschnittenen Partikel (15), wobei die Abführung zu einer Anlage (20) zur zentralen Absaugung von geschnittenen Partikeln (15) mehrerer Dokumentenvernichter führt, **dadurch gekennzeichnet, dass** die Abführung einen Zwischenspeicher (14) für eine gewisse Menge (16) von geschnittenen Partikeln (15) aufweist, wobei der Zwischenspeicher (14) eine Absaugöffnung (18) für die Partikel aufweist und damit an die Anlage angeschlossen ist, und wobei die Wandungen (25, 26) des Zwischenspeichers (14) luftdurchlässig ausgebildet sind.

2. Dokumentenvernichter nach Anspruch 1, **dadurch gekennzeichnet, dass** der Zwischenspeicher (14) für eine Menge (16) von Partikeln (15) ausgebildet ist, die zwischen 10 und 100 Schneidvorgängen des Dokumentenvernichters entspricht, wobei vorzugsweise das Volumen des Zwischenspeichers (14) zwischen 5l und 50l liegt.

3. Dokumentenvernichter nach Anspruch 1 oder 2, **dadurch gekennzeichnet, dass** die Wandungen (25, 26) Durchbrüche (29) aufweisen.

4. Dokumentenvernichter nach Anspruch 3, **dadurch gekennzeichnet, dass** die Durchbrüche (29) derart ausgebildet sind, dass sie einen Durchtritt der Partikel (15) verhindern.

5. Dokumentenvernichter nach Anspruch 4, **dadurch gekennzeichnet, dass** die Durchbrüche (29) nach Art von Schuppen mit einem Überhang (30) nach unten und in den Zwischenspeicher (14) hinein ausgebildet sind.

6. Dokumentenvernichter nach einem der Ansprüche 3 bis 5, **dadurch gekennzeichnet, dass** die Durchbrüche (29) mit nach innen öffenbaren Klappen verschlossen sind, wobei die Klappen vorzugsweise an der Innenseite des Zwischenspeichers (14) angeordnet sind und an ihrer Oberseite gelenkig gelagert sind derart, dass sie durch ihr eigenes Gewicht oder eine Gewichtsbelastung von oben in die geschlossene Stellung bewegbar sind.

7. Dokumentenvernichter nach einem der Ansprüche 3 bis 6, **dadurch gekennzeichnet, dass** die Durchbrüche (29) mit der Umgebung luftführend verbunden sind derart, dass bei Absaugung von Partikeln (15) aus dem Zwischenspeicher (14) Luft durch die Durchbrüche (29) angesaugt wird und durch die angesammelten Partikel (15) hindurch zu der Absaugöffnung (18) strömt, vorzugsweise unter Verwirbelung der Partikel (15).

8. Dokumentenvernichter nach einem der vorhergehenden Ansprüche, **dadurch gekennzeichnet, dass** der Dokumentenvernichter und/oder die Anlage zur Absaugung einen Druckluftanschluss (22, 23) aufweist, vorzugsweise für einen zur Druckluftbetätigung ausgebildeten Verschluss (19) der Absaugung (20), wobei die Druckluft mittels Kanälen (32, 33) zu wenigstens einem Durchbruch (29) geleitet ist, und wobei insbesondere das Leiten von Druckluft zu den Durchbrüchen vor oder gleichzeitig mit Betätigung des Verschlusses (19) erfolgt.
